# EUROPEAN PATENT SPECIFICATION

(11) **EP 0 756 791 B1**
(45) Date of publication and mention of the grant of the patent: **12.06.2002**
(21) Application number: 95915257.0
(22) Date of filing: 13.04.1995
(51) Int. Cl.: H04L 12/24

(54) **DATA TRANSMISSION NETWORK**
DATENÜBERTRAGUNGSNETZ
RESEAU DE TRANSMISSION DE DONNEES

(30) Priority: 20.04.1994 GB 9407817; 17.10.1994 GB 9420938
(43) Date of publication of application: 05.02.1997
(73) Proprietor: MARCONI COMMUNICATIONS LIMITED, Coventry, CV3 1HJ (GB)
(72) Inventor: DORWARD, Richard, Munro, Coventry CV5 6PD (GB)
(74) Representative: Burrington, Alan
(86) International application number: GB9500846
(87) International publication number: WO9529548

(56) References cited:
- EP-A- 0 180 990
- WO-A-84/01070

## Description

This invention relates to a data transmission network which comprises a plurality of interconnected modules, sometimes known as plug-in cards, which are typically mounted within racks or shelves. Although the invention has a primary application in the telecommunication field, it is also of use with other networks.

Such modules do from time to time require repair or, for example, hardware or software updates and it is important that an accurate record of the build state be maintained for each module. It has been proposed to store this information in an on-board memory on each module for remote access by the network controller. There has been a tendency for operators to require more detailed records which has led to an increase in the size of memories being provided.

There is disclosed in WO 84/01070 a digital transmission network in which modules of the network are provided with transmitters by which they can send signals indicative of the characteristic of the module, e.g. its serial number and location, to a maintenance centre, the purpose being to enable it to be ascertained how the component parts of the network are interconnected.

This invention provides a data transmission network comprising a plurality of interconnected modules, each module including an on-board memory containing data representative of a unique identity code, the memory on each module being remotely readable by a common network controller which includes data representative of the manufacturing, service record and physical location of each module.

Limiting the information stored on each module to a unique identity code can confer several advantages. If operators wish to have more detailed records in the future then these can much more easily be implemented on a central database, than by attempting to place more data in an on-board memory which is possibly full or may require an expensive hardware modification. The data processing time, or bandwidth, required to drag the service information from the module and through the network is avoided. It is also important that the physical location of each module is known so that a service engineer, while knowing in theory where a particular module is located in the system architecture, can find the module within a particular shelf, for example, in the field for servicing purposes or for hardware or software updates. Databases which specify where a particular module is located have been provided. An inventive step is based upon overcoming the technical prejudice that has in the past required manufacturing and service data to be physically attached to the module to which they relate.

The fact that the memory is remotely readable by the network controller ensures, for example, that checks can be made that a particular module is in the position that its record indicates, enables "lost" modules to be retrieved, and also allow verification that its hardware and software is compatible with the rest of its associated equipment.

The invention also provides a method of operating a data transmission network which comprises interconnected modules, each module including an on-board memory which is remotely readable by a common network controller, the method comprising the step of storing within each on-board memory data representative of a unique identity code, and storing within the network controller data representative of the manufacturing, service record and physical location of each module.

In order that the invention may be better understood, an embodiment thereof will now be described by way of example with reference to the accompanying drawings in which:
Figure 1 is a schematic representation of a system according to the invention; and
Figure 2 shows schematically a module for use in the network of Figure 1.

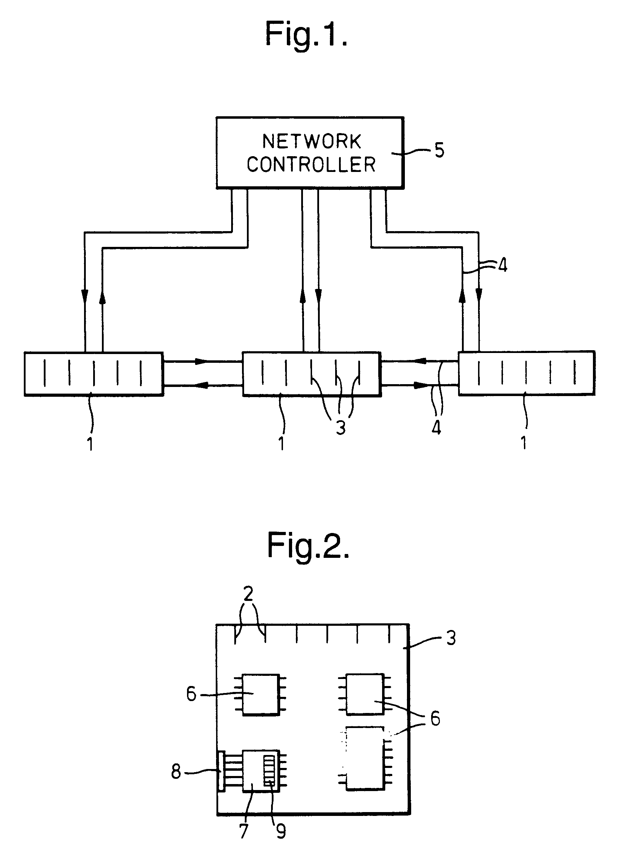

Referring to Figure 1 a data transmission network comprises a plurality of racks or shelves 1 which carry contacts (not shown) to mate with corresponding contacts 2 (Figure 2) on a removable module or plug-in card 3. The cards 3 are typically used to process and route telecommunication or other data signals to a variety of destinations. Different shelves 1 are interconnected to one another by communication links 4 and also to a common network controller 5 which functions as will be described.

Each card 3 includes electronic components 6 including a memory 7 of a non-volatile type which has stored therein data representative of a serial number or code unique to that card. An access port 8 is provided for reading the code into an external piece of test equipment, if required. In addition a bar code 9 is provided upon which the same or an equivalent unique serial number or code is recorded. The network controller 5 incorporates a database within which data providing a complete record of each card 3 is stored, indexed by means of the unique serial number. Such record data typically includes, amongst other items, the manufacturer and date of manufacture together with the dates and types of hardware or software updates and of repairs. In addition the physical location of the card is also stored. Each card or module in the system architecture is addressable by means of an address signal and a further signal can be incorporated, when required, to trigger the module at a particular address location to send back the identity code. In this way each card can be interrogated to verify that a card at a particular address corresponds to that recorded on the database. Frequently service engineers swap cards around without always recording which card is in a particular location and the fact that each card can be interrogated ensures that these can be identified. The provision of the access port 8 and bar code 9 also means that the serial number can be read even when the card is disconnected from the shelf 1. Furthermore it also allows the identification of particular cards that may require a soft or hardware update. Although as described the memory 7 is provided by means of a separate component, the appropriate function may be performed by one of the other components on the card 3. The network may be configured so that the service engineer can update the database whilst in the field. The network may also be configured so the database is automatically updated. For example, each shelf or rack, or other relatively bigger system building block, may include means for interrogating each of its associated modules or cards and for relaying the address location and physical location information to the database.

The databases for each of the items of information listed need not, of course, be physically located at the same place, all that is important is that they are not located on the modules to which they relate.

## Claims

1. A data transmission network comprising a plurality of interconnected modules (3), each module including an on board memory (7) containing data, the memory on each module being remotely readable by common network controller (5), **characterised in that** the said module data comprises only data representative of a unique identity code of the particular module and the said controller includes data representative of the manufacturing, service record and physical location of each module.

2. A data transmission network according to claim 1 in which an access port (8) is provided on each module (3) so that the identity code may be read by external test equipment.

3. A method of operating a data transmission network which comprises interconnected modules (3), each module including an on board memory (7) which is remotely readable by a common network controller (5), the method being **characterised by** the step of storing within each on board memory (7) data representative only of a unique identity code and storing within the network controller (5) data representative of the manufacturing, service record and physical location of each module.

## Patentansprüche

1. Datenübertragungsnetzwerk mit einer Vielzahl von miteinander verbundenen Modulen (3), wobei jedes Modul einen Daten enthaltenden platinenintegrierten Speicher (7) aufweist, wobei der Speicher auf jedem Modul über einen gemeinsamen Netzwerk-Controller (5) fernauslesbar ist, **dadurch gekennzeichnet, dass** die Moduldaten ausschließlich Daten enthalten, die einem eineindeutigen Identitätscode des jeweiligen Moduls entsprechen, und dass der Controller Daten enthält, die der Herstellung, dem Serviceprotokoll und dem physischen Ort eines jeden Moduls entsprechen.

2. Datenübertragungsnetzwerk nach Anspruch 1, wobei auf jedem Modul (3) ein Zugriffsanschluss (8) angeordnet ist, so dass der Identitätscode durch eine externe Testeinrichtung ausgelesen werden kann.

3. Verfahren zum Betreiben eines Datenübertragungsnetzwerks, welches eine Vielzahl von miteinander verbundenen Modulen (3) ausweist, wobei jedes Modul einen über einen gemeinsamen Netzwerk-Controller (5) fernauslesbaren platinenintegrierten Speicher (7) aufweist, wobei das Verfahren durch den Schritt **gekennzeichnet** ist, dass auf jedem platinenintegrierten Speicher (7) Daten gespeichert werden, die ausschließlich einem eineindeutigen Identitätscode des jeweiligen Moduls entsprechen, und dass auf dem Netzwerk-Controller (5) Daten gespeichert werden, die der Herstellung, dem Serviceprotokoll und dem physischen Ort eines jeden Moduls entsprechen.

## Revendications

1. Réseau de transmission de données comportant une pluralité de modules interconnectés (3), chaque module comportant une mémoire sur carte (7) contenant des données, la mémoire sur chaque module étant lisible à distance par un contrôleur de réseau commun (5), **caractérisé en ce que** lesdites données de module comportent uniquement des données représentatives d'un code d'identité unique du module particulier et ledit contrôleur comporte des données représentatives de la fabrication, de l'état de service et de l'emplacement physique de chaque module.

2. Réseau de transmission de données selon la revendication 1, dans lequel un port d'accès (8) est agencé sur chaque module (3) de sorte que le code d'identité peut être lu par un équipement d'essai externe.

3. Procédé pour faire fonctionner un réseau de transmission de données qui comporte des modules interconnectés (3), chaque module comportant une mémoire sur carte (7) qui est lisible à distance par un contrôleur de réseau commun (5), le procédé étant **caractérisé par** l'étape consistant à mémoriser dans chaque mémoire sur carte (7) des données représentatives uniquement d'un code d'identité unique et à mémoriser dans le contrôleur de réseau (5) des données représentatives de la fabrication, de l'état de service et de l'emplacement physique de chaque module.
